Europäisches Patentamt

(19) European Patent Office

Office européen des brevets

(11) Publication number: **0 305 942 A2**

## (12) EUROPEAN PATENT APPLICATION

(21) Application number: 88114044.6

(51) Int. Cl.⁴: **B23D 21/14**

(22) Date of filing: 29.08.88

(30) Priority: 31.08.87 US 91563

(43) Date of publication of application:
08.03.89 Bulletin 89/10

(84) Designated Contracting States:
**BE DE ES FR GB IT SE**

(71) Applicant: **WESTINGHOUSE ELECTRIC CORPORATION**
**Westinghouse Building Gateway Center**
**Pittsburgh Pennsylvania 15222(US)**

(72) Inventor: **Huggins, Thomas Bourne**
**SR. 239 Barmount Drive**
**Columbia South Carolina 29210(US)**

(74) Representative: **Gallo, Wolfgang, Dipl.-Ing.**
**(FH) et al**
**Patentanwälte Dipl.Ing. R. Holzer,**
**Dipl.Ing.(FH) W. Gallo**
**Philippine-Welser-Strasse 14**
**D-8900 Augsburg(DE)**

(54) Positive drive mechanism for uniform feed of internal tube cutter.

(57) The drive mechanism is for use with a rotary tube cutter having an elongate cutter body (44) which is insertable into a tube to be cut, and which has disposed therein a cutting-element carrier (54) and an elongate member (48) which is movable to advance the cutting-element carrier in a cutting direction.

The drive mechanism includes a housing (70) having means (76) for rotatably supporting the cutter body (44) at a rear portion thereof, drive means (72) for rotating the cutter body, and cutter-element feed means (74) cooperable with the elongate member (48) and effective, during rotation of the cutter body, to intermittently move the elongate member so as to advance the cutting-element carrier (54) incrementally in said cutting direction at a rate proportional to the rotational speed of the cutter body. The cutter-element feed means (74) also is manually operable (106) to advance the cutting-element carrier (54) to, or to retract it from, its cutting position.

FIG. 5

## POSITIVE DRIVE MECHANISM FOR UNIFORM FEED OF INTERNAL TUBE CUTTER

The present invention relates generally to the art of severing tubes, such as guide thimbles from a fuel assembly top nozzle and, more particularly, to a positive drive mechanism for effecting uniform feed of an internal tube cutter in order to circumferentially cut each guide thimble from the inside out without generating chips.

In most nuclear reactors, the reactor core is composed of a large number of elongate fuel assemblies each including a multiplicity of fuel rods held in an organized array by grids spaced longitudinally along the fuel assembly and attached to tubular control-rod guide thimbles. Top and bottom nozzles on opposite ends of the fuel assembly are secured to and portions of the guide thimbles extending above and below the opposite ends of the fuel rods, the upper end portions of the guide thimbles typically extending into passageways formed through the adapter plate of the top nozzle, and within the respective passageways, being attached to the adapter plate.

During operation of a nuclear reactor, some of the fuel rods may develop cracks due primarily to internal stresses and are then removed and replaced upon reconstitution of the affected fuel assembly or assemblies. In order to reconstitute a fuel assembly, it is necessary to remove its top nozzle. One way of doing so is to sever each guide thimble, where it is attached to the top nozzle adapter plate, by circumferentially cutting it from the inside out just below its region of attachment to the adapter plate. Precision internal tube cutters devised for this purpose are disclosed in Applicant's U.S. Patents 4,589,309 and 4,621,549.

The present invention has for its principal object to provide a drive mechanism for driving such precision internal tube cutter feed in a manner enabling guide thimbles (usually made of stainless steel) to be severed from the top nozzle of a fuel assembly without creating chips and other debris.

The invention accordingly resides in a positive drive mechanism for use, or in combination, with an internal tube cutter including an elongate cutter body insertable into a tube to be cut, a cutting-element carrier supported in a forward portion of said cutter body and movable therein between a home position and a cutting position, and an elongate member which is supported in said cutter body for longitudinal movement therein and which coacts with the cutting-element carrier so as to effect movement thereof to said cutting position when the elongate member moves longitudinally in one direction, and to said home position when the elongate member moves longitudinally in the opposite direction, said cutting-element carrier supporting a cutting element for cutting the tube when the cutting-element carrier is in its cutting position and the elongate cutter body is rotated about the longitudinal axis thereof characterized in that said positive drive mechanism comprises a housing including means for rotatably supporting said cutter body at a rear portion thereof; a cutter-body drive portion drivingly connected to, and operable to effect rotation of, said cutter body when rotatably supported in said housing; and a cutter-element feed portion cooperable with said elongate member at said rear portion of the cutter body, and operable to intermittently move the elongate member in said one direction during rotation of the cutter body.

This positive drive mechanism according to the invention operates automatically to ensure a uniform positive, incremental feed of the cutting wheel into the guide-thimble wall as the cutter body is being rotated. This automatic positive feed feature minimizes work-hardening of the guide-thimble material, usually stainless steel, and prolongs the useful life of the cutter by controlling the advance of the cutting element, usually a carbide wheel, into the guide thimble at a rate proportional to the rotational speed of the cutter. It also has a manually operated rapid advance/retract feature which can override the automatic feed feature of the drive mechanism.

Preferably, the cutter-body drive portion is operable to rotate the cutter body either in one or an opposite direction, the cutter-element feed portion being operable to intermittently move the elongate member in said one direction during rotation of the cutter body in said one direction, and to permit movement of the elongate member in the opposite direction upon rotation of the cutter body in said opposite direction. The cutter-element feed portion of the drive mechanism preferably has also a manually operable rapid advance/retract feature for overriding the automatic feed feature.

More particularly, the cutter-body drive portion includes power means mounted to the housing and having a rotatable output shaft, a driven member drivingly coupled to the cutter body, and a drive member coupled to the output shaft of the power means and operatively connected to the driven member through an endless flexible member for transmitting the rotary motion of the output shaft to the cutter body.

The cutter-element feed portion includes a rotatable feed member threadably engaged in a rear portion of the cutter body, and a ratchet attached to the feed member for rotatable movement therewith. The feed member coacts with the elongate member which is longitudinally movable in the cutter body. The feed member is adapted to be maintained stationary or allowed to rotate together with the cutter body. If maintained stationary, while the cutter body is rotated in one direction, the feed member threads itself into the cutter body and thereby moves the elongate member in said one direction toward the cutting-element carrier. On the other hand, if the feed member is maintained stationary while the cutter body is counter-rotated in an opposite direction, it will unthread itself from the cutter body and thereby permits movement of the elongate member in the opposite direction away from the cutting-element carrier.

The cutter-element feed portion of the positive drive mechanism includes a pawl, a cam, and a cam follower. The pawl is movable into and from latching engagement with the ratchet so as, respectively, to maintain the feed member stationary relative to the cutter body or to release it for rotation together therewith. The pawl is biased toward engagement with the ratchet.

The cam is connected to the rear portion of the cutter body for rotation therewith, and it has a periphery with first and second portions thereon. The cam follower is connected to the pawl, and it rides on the peripheral surface of the cam so that, as the latter rotates together with the cutter body, the cam follower upon riding onto the first peripheral cam portion will cause the pawl to engage the ratchet, and upon riding from the first peripheral cam portion onto the second one will disengage the pawl from the ratchet.

Preferably, the positive drive mechanism also includes a projection which extends forward from the housing and is adjustable for setting the depth to which the forward portion of the cutter body extends into the tube to be severed.

The invention will become more readily apparent from the following description of a preferred embodiment thereof illustrated, by way of example only, in the accompaning drawings, in which:

Fig. 1 is an elevational view, partly sectioned and with parts broken away for clarity, of a conventional fuel assembly which is reconstitutable by means of an internal tube cutter supported and powered by a positive drive mechanism constructed in accordance with the invention;

Fig. 2 is a side elevational view, partly sectioned, of a conventional precision tube cutter shown in foreshortened form and in position to cut the upper end portion of a guide thimble attached to a top-nozzle adapter plate, the guide thimble and the adapter plate being illustrated in fragmentary, sectioned form;

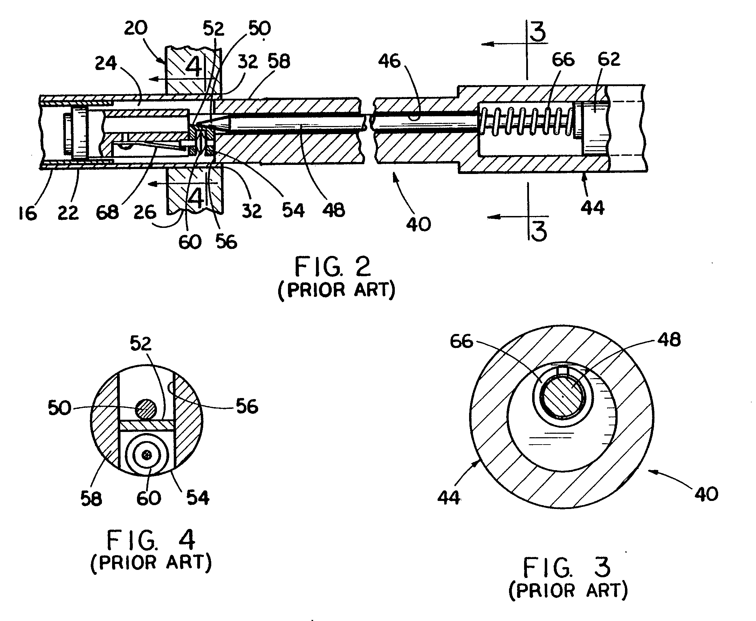

Fig. 3 is an enlarged cross-sectional view of the tube cutter, taken along line 3-3 of Fig. 2;

Fig. 4 is an enlarged cross-sectional view of the tube cutter, taken along line 4-4 of Fig. 2;

Fig. 5 is a side elevational view, partly sectioned, of the positive drive mechanism embodying the invention, together with the internal tube cutter supported and operated thereby; and

Fig. 6 is an enlarged sectional view taken along line 6-6 of Fig. 5.

In the following description, like reference characters designate like or corresponding parts throughout the several views of the drawings, and terms such as "forward", "rearward", "left", "right", "upwardly", "downwardly", and the like are employed as words of convenience and are not to be construed as limiting terms.

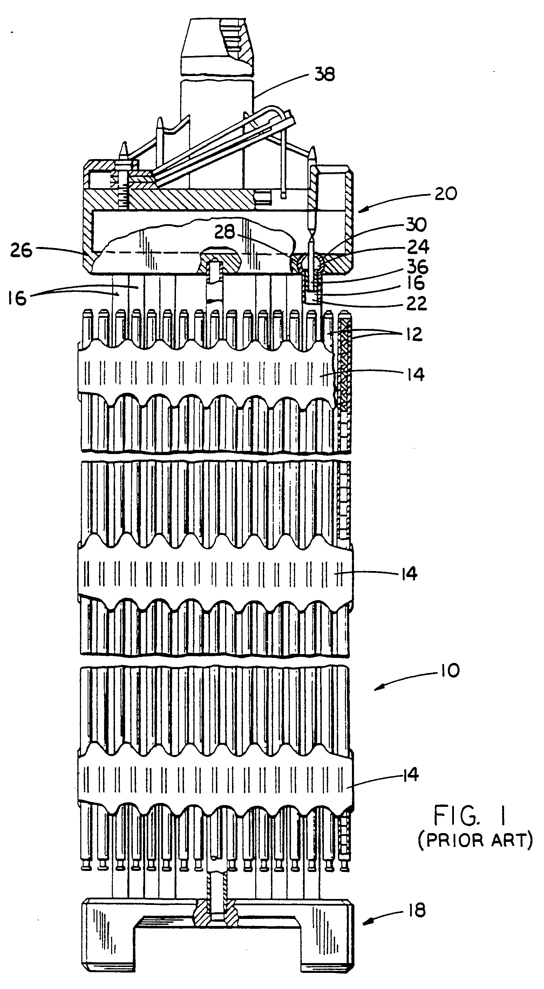

Referring now to the drawings, and particularly to Fig. 1, the conventional fuel assembly illustrated therein and generally designated with numeral 10 includes an array of fuel rods 12 held in parallel spaced relationship with respect to one another by means of grids 14 which, in turn, are attached to guide tubes or thimbles 16 having their opposite ends affixed respectively to bottom and top nozzles 18, 20 of the fuel assembly, each guide thimble 16 having an upper end portion 22 thereof inserted into a passageway 24 extending through an adapter plate 26 of the top nozzle 20, and having said end portion 22 affixed to the adapter plate 26 in a suitable manner, such as by means of a circumferential bulge 28 fit into an internal groove 30 within the passageway, as seen from Fig. 1, or by means of a circumferential weld 32 formed between the adapter plate 26 and the upper edge 34 of the guide thimble 16, as seen from Fig. 2.

At least some of the guide thimbles 16 have associated therewith control rods 36 which are connected to a rod cluster control mechanism 38 located above the top nozzle 20 and operable to axially move the control rods within the guide thimbles 16 as well known in the art.

Positive Drive Mechanism for Feeding Tube Cutter

When it is desired to remove the top nozzle 20 for the purpose of reconstituting the fuel assembly 10, the control rods 36 are withdrawn from the associated guide thimbles 16, and all of the guide thimbles 16 have their upper ends severed by means of a suitable internal cutting device, such as one of the precision cutters disclosed in the above-mentioned U.S. Patent Nos. 4,589,309 and 4,621,549.

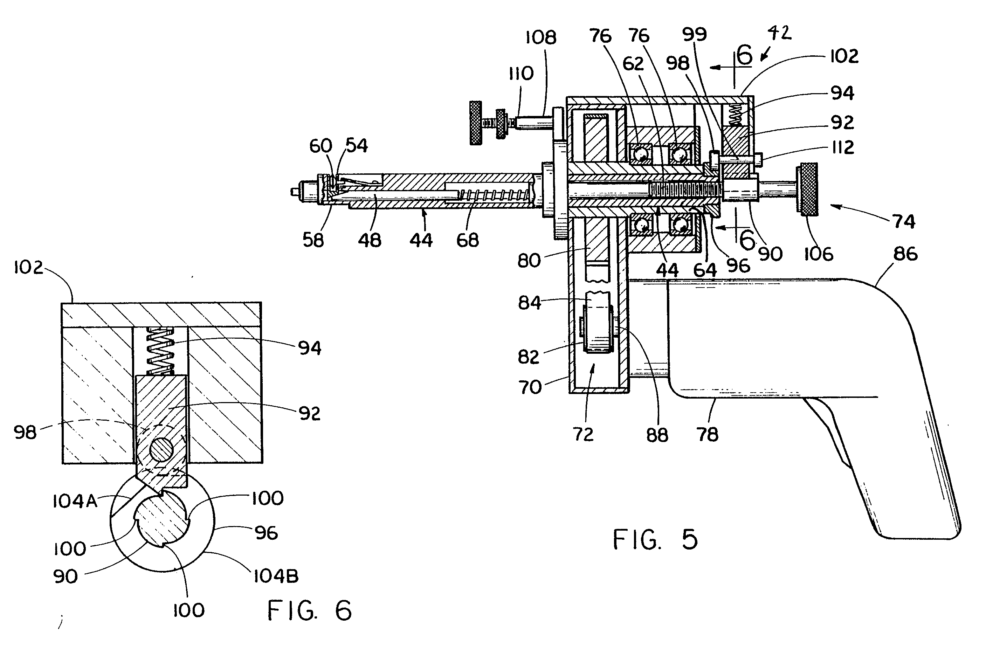

In Fig. 2 of the drawings, such internal precision cutter, generally designated with numeral 40, is shown as supported and operable by a positive drive mechanism 42 embodying the invention. The precision tube cutter 40 includes a generally cylindrical, elongate cutter body 44 having an axially offset bore 46 with an axially movable pin 48 disposed therein. At its distal or lower end, the pin 48 has a conical tip 50 which coacts with an inclined surface 52 on the inner end of a transversely movable cutting-element carrier in the form of a slide 54 guided in a transverse slot 56 within a distal or forward portion 58 of the cutter body 44, and rotatably supporting a cutting element in form of a circular cutting wheel 60. The upper end of the pin 48 is shown engaged with the lower end of a feed screw 62 of the positive drive mechanism 42 which feed screw 62 is threadedly engaged in a rear portion of the cutter body 44, as shown in Fig. 5.

Upon threading of the feed screw 62 further into the cutter body 44, the pin 48 is moved downward so as to advance the slide 54 together with the cutting wheel 60 radially outward toward the inner wall surface of the upper end portion 22 of the guide thimble 16. Upon unthreading of the feed screw 62 from the cutter body 44, the pin 48 moves upwards under the action of a return spring 66 coiled about the pin 48, thereby enabling another return spring 68 in the form of a leaf spring acting against the slide 54 to restore the latter radially inward to its home position in which the cutting wheel 60 is retracted from the perimeter of the forward portion 58 of the cutter body 44.

Thus, with the working end of the cutter 40 inserted into the upper end portion 22 of the guide thimble 16 as shown in Fig. 5, therefore, concurrent rotation of the cutter body 44 and radial outward advancement of the movable slide 54 will cause the cutting wheel 60 to cut the wall of the end portion 22 of the guide thimble precisely just below its region of attachment to the adapter plate 26 of the top nozzle 20.

Referring now to Figs. 5 and 6, there is shown the positive drive mechanism 42 which is adapted to intermittently advance the cutting wheel 60 into the guide thimble upper end portion 22 at a rate that is proportional to the rotational speed of the cutter body 44 so as to cause a "parting action" on the guide thimble upper end portion 22 which severs it without producing chips and avoids work hardening of the guide thimble material.

The basic components of the drive mechanism 42 include a housing 70, a cutter body drive portion 72, and a cutter wheel feed portion 74. The housing 70 rotatably supports the cutter body 44 at bearings 76, and supports the cutter body drive portion 72. The cutter body drive portion 72 is drivingly connected to the cutter body 44 and operable to rotate or counter-rotate it respectively in counter-clockwise or clockwise directions. The cutter wheel feed portion 74 coacts with the elongate pin 48 of the cutter 40 within the rear portion of the cutter body 44, and is operable to intermittently move the pin 48 in a forward direction toward the slide 54 during each rotation cycle of the cutter body 44 effected by the cutter body drive portion 72, or to permit intermittent movement of the pin 48 in the opposite or rearward direction away from the slide 54 during counter-rotation of the cutter body 44.

More particularly, the cutter body drive portion 72 includes power means 78, a driven member 80, a drive member 82 and an endless flexible member 84. The power means 78 is preferably in the form of a variable-speed, reversible drive motor housed in a casing 86 (for example, a hand-held power drill) adapted to be gripped manually and attached to the housing 70. The preferable reversible motor has an output drive shaft 88 selectively rotatable either clockwise or counterclockwise. The driven member 80 is a pulley drivingly coupled to the cutter body 44 as shown, by being secured to a tubular shaft 64 which is journalled in the baring 76 and has the rear portion of the cutter body 44 fit therein and affixed thereto for rotation together with the shaft 64. The drive member 82 also is a pulley secured to the output shaft 88 of the power means motor 78. The endless flexible member 84 can be a belt which extends between and is drivingly entrained about the radially aligned driven and drive pulleys 80, 82 so as to transmit the clockwise or counterclockwise rotary motion of the output shaft 88 to the cutter body 44.

The cutter wheel feed portion 74, which is generally located rearward of the cutter body drive portion 72, includes the feed screw 62, a ratchet 90, a pawl 92, a biasing spring 94, a cam 96 and a cam follower 98. As mentioned previously, the feed screw 62 is rotatably and threadably engaged in the rear portion of the cutter body 44 and is axially engaged therein with the pin 48 of the cutter 40. The feed screw 62 is adapted to be maintained stationary through cooperation of the ratchet 90 with the pawl 92, as will be described shortly. When maintained stationary with respect to the cutter body 44 while the latter is rotated counterclockwise, the feed screw 62, which has fine "right-handed" external threads, will thread itself into the cutter body 44 and thus move the pin 48 forward toward the slide 54, thereby causing the latter to advance the cutting wheel 60 radially outward toward and into contact with the guide thimble upper end portion 22. On the other hand, if the feed screw 62 is maintained stationary with respect to the cutter body 44 while the latter is rotated clockwise, it will unthread itself from the cutter body 44 and thereby permit the pin 48, aided by the return spring 66, to move rearward in the opposite direction away from the slide 54, thereby enabling the return spring 68 to retract the cutting wheel 60 from the wall of the guide-thimble end portion 22, and to restore the slide 54 to its home position.

The ratchet 90 is affixed to the feed screw 62 so as to rotate together therewith, and it has on its periphery a plurality of spaced-apart teeth 100. The pawl 92 is mounted on a rear bracket 102 on the drive mechanism housing 70 so as to be movable, radially with respect to the ratchet 90, into and from engagement with the ratchet teeth 100. When engaged with the ratchet teeth 100, the pawl 92 maintains the ratchet 90 together with the feed screw 62 stationary relative to the cutter body 44, thereby causing the feed screw 62, as just explained, to thread itself into the cutter body 44 upon counterclockwise rotation thereof, and to unthread itself from the cutter body 44 upon clockwise rotation thereof. On the other hand, when the pawl 92 is disengaged from the ratchet teeth 100, the ratchet 90 and the feed screw 62 are free to rotate with the cutter body 44 so that the feed screw 62 will neither thread itself into nor unthread itself from the cutter body. A biasing spring 94 disposed between the rear bracket 102 and the pawl 92 normally urges the pawl 92 toward engagement with the ratchet teeth 100.

Cooperation between the cam 96 and cam follower 98 determines whether or not the pawl 92 engages the ratchet teeth 100. The cam 96 is located between the rear bearing 76 and the ratchet 90, and it is attached to the rear portion of the cutter body 44 for rotation therewith. The cam 96 has a profile or periphery 104 with first and second portions 104A, 104B representing the lowest and highest portions thereof. The cam follower 98 is rotatably mounted on a shaft 99 supported by the pawl 92, and rides on the periphery 104 of the cam 96. Thus, during rotation of the cutter body 44 and of the cam 96 thereon, the pawl 92 moves into engagement with the ratchet teeth 100 under the action of the spring 94 when the cam follower 98 rides onto the lowest peripheral cam portion 104A, and is disengaged from the ratchet teeth 100 against the action of the spring 94 when the cam follower 98 rides off the lowest cam portion 104A and onto the highest peripheral cam portion 104B.

In one design of the periphery 104 of the cam 96, there is one hundred thirty-five degrees of rotation between the lowest portion 104A and the highest portion 104B which ensures engagement of one of the ratchet teeth 100 with the pawl 92 for at least ninety degrees of each rotation cycle of the cutter body 44 and the cam 96. This degree or interval of rotation causes the cutting wheel 60 to be advanced radially outward approximately 68.5 microns during each rotation cycle of the cutter body 44. The outward motion rate of the cutting wheel 60 can be changed by changing the design of the periphery 104 of the cam 96.

Also, the feed screw 62 has an extension in the form of a knob 106 which can be manually rotated for rapidly threading or unthreading the feed screw 62 into or from the cutter body 44 while the latter is stationary. Normally, this feature would be used to move the cutting wheel 60 up against the thimble wall immediately before actual severing is commenced, and/or to effect retraction of the cutting wheel 60 from the thimble wall after severing is completed and before the cutter 40 is axially withdrawn from the guide thimble. Prior to turning the knob 106, the pawl 92 is disengaged from the ratchet 90 by means of a release pin 112 connected to and projecting rearwardly from the pawl 92.

An elongate member 108 provided on the housing 70 of the drive mechanism 42 and projecting forwardly therefrom is longitudinally, e.g. threadably, adjustable for setting the depth to which the forward portion 58 of the cutter body 44 can extend into the guide thimble upper end portion 22, this depth being determined, for instance when the forward end 110 of the member 108 engages an upper surface portion of the top-nozzle adapter plate 26.

## Claims

1. A positive drive mechanism (42) for use, or in combination, with an internal tube cutter (40) including an elongate cutter body (44) insertable into a tube to be cut, a cutting-element carrier (54) supported in a forward portion (58) of said cutter body and movable therein between a home position and a cutting position, and an elongate member (48) which is supported in said cutter body (44) for longitudinal movement therein and which coacts with the cutting-element carrier (54) so as to effect movement thereof to said cutting position when the elongate member moves longitudinally in one direction, and to said home position when the elongate member moves longitudinally in the opposite direction, said cutting-element carrier supporting a cutting element (60) for cutting the tube when the cutting-element carrier is in its cutting position and the elongate cutter body (44) is rotated about the longitudinal axis thereof, characterized in that said positive drive mechanism (42) comprises a housing (70) including means (76) for rotatably supporting said cutter body (44) at a rear portion thereof; a cutter-body drive portion (72) drivingly connected to, and operable to effect rotation of, said cutter body (44) when rotatably supported in said housing; and a cutter-element feed portion (74) cooperable with said elongate member (48) at said rear portion of the cutter body (44), and operable to intermittently move the elongate member (48) in said one direction during rotation of the cutter body, thereby to advance the cutting-element carrier (54) incrementally in a cutting direction at a rate which is proportional to the rotational speed of said cutter body (44).

2. A positive drive mechanism according to claim 1, characterized in that said cutter-body drive portion (72) is operable to rotate the cutter body (44) either in one or an opposite direction, said cutter-element feed portion (74) being operable to intermittently move the elongate member (48) in said one direction during rotation of the cutter body in said one direction, and to enable movement of the elongate member in said opposite direction upon rotation of the cutter body in said opposite direction.

3. A positive drive mechanism according to claim 1 or 2, characterized in that said cutter-body drive portion (72) comprises power means (78) mounted on said housing (70) and having a rotatable drive shaft (88); a driven member (80) drivingly coupled to said cutter body (44) when rotatably supported in said housing (70); and a drive member (82) drivingly coupled to the drive shaft (88) of said power means (78) and drivingly connected to said driven member (80) for transmitting rotary motion from said drive shaft (88) to said cutter body (44).

4. A positive drive mechanism according to claim 3, characterized in that said drive member (82) and said driven member (80) are operatively interconnected through an endless flexible member (84).

5. A positive drive mechanism according to claim 1, 2, 3 or 4, characterized in that said cutter-element feed portion (72) includes a rotatable feed member (62) which is threadably engaged in said rear portion of the cutter body (44), when rotatably supported in said housing (70), and coacts therein with said elongate member (48) of the internal tube cutter (40), said feed member (62), when maintained stationary while said cutter body (44) is rotated in one direction, threading itself into the cutter body (44) and thereby causing movement of said elongate member (48) in said one direction, and said feed member (62), when maintained stationary while said cutter body (44) is counter-rotated in an opposite direction, unthreading itself from the cutter body (44) and thereby enabling movement of the elongate member (48) in said opposite direction.

6. A positive drive mechanism according to claim 5, characterized in that said cutter-element feed portion (74) includes a ratchet (90) attached to said feed member (62) for rotation therewith, and a pawl (92) disposed in said housing (70) adjacent said ratchet (90) so as to be movable into and from engagement therewith, said pawl (92), when engaged with said ratchet (90), maintaining said feed member (62) stationary and, when disengaged from the ratchet (90), permitting the feed member (62) to rotate with said cutter body (44) without either threading itself into or unthreading itself from the cutter body (44).

7. A positive drive mechanism according to claim 6, characterized in that said pawl (92) is biased toward engagement with said ratchet (90).

8. A positive drive mechanism according to claim 6 or 7, characterized in that said cutter-element feed portion (74) includes a cam (96) affixed to said rear portion of the cutter body (44), when rotatably supported in said housing (70), for rotation therewith and having a periphery (104) with first and second peripheral cam portions (104A, 104B), and a cam follower (98) mounted on said pawl (92) and riding on the periphery (104) of said cam (96) such that, as said cam (96) rotates together with the cutter body (44), said cam follower (98) upon riding onto said first peripheral cam portion (104A) causes said pawl (92) to engage said ratchet (90), and upon riding onto said second peripheral cam portion (104B) causes the pawl (92) to be disengaged from the ratchet (90).

9. A positive drive mechanism according to claim 5, 6, 7 or 8, characterized in that said feed member (62) has a portion (106) for manually rotating the feed member so as to thread it into or unthread from said cutter body (44) while the latter is stationary.

10. A positive drive mechanism according to claim 9, characterized in that said portion (106) of the feed member (62) is a manually operable knob (106).

11. A positive drive mechanism according to any one of the preceding claims, characterized in that said housing (70) has exteriorly disposed thereon an adjustable projection (108) for determining the depth to which said forward portion (58) of the cutter body (44), when rotatably supported in the housing (70), is insertable into the tube to be cut.

FIG. 1
(PRIOR ART)

FIG. 2
(PRIOR ART)

FIG. 3
(PRIOR ART)

FIG. 4
(PRIOR ART)

FIG. 5

FIG. 6

EP 0 305 942 A2